# EUROPÄISCHE PATENTSCHRIFT

(11) **EP 2 446 529 B1**
(45) Veröffentlichungstag und Bekanntmachung des Hinweises auf die Patenterteilung: **17.04.2013**
(21) Anmeldenummer: 10723499.9
(22) Anmeldetag: 06.05.2010
(51) Int. Cl.: H02P 25/16, F03D 11/00, F03D 7/02

(54) **NOTVERSTELLEINRICHTUNG FÜR BLATTVERSTELLSYSTEME VON WINDENERGIEANLAGEN**
EMERGENCY ADJUSTING DEVICE FOR BLADE ADJUSTING SYSTEMS OF WIND POWER PLANTS
DISPOSITIF DE RÉGLAGE DE SÉCURITÉ POUR DES SYSTÈMES DE RÉGLAGE DE PALES D'ÉOLIENNES

(30) Priorität: 23.06.2009 DE 102009029884
(43) Veröffentlichungstag der Anmeldung: 02.05.2012
(73) Patentinhaber: Robert Bosch GmbH, 70469 Stuttgart (DE)
(72) Erfinder: BECKER, Stephan, 63762 Grossostheim (DE); SPATZ, Bernd, 63857 Waldaschaff (DE)
(74) Vertreter: Thürer, Andreas
(86) Internationale Anmeldenummer: PCT/EP2010/002775
(87) Internationale Veröffentlichungsnummer: WO 2010/149246

(56) Entgegenhaltungen:
- EP-A2- 1 852 605
- DE-A1-102006 015 511

## Beschreibung

Die Erfindung betrifft eine Notverstelleinrichtung für Blattverstellsysteme von Windenergieanlagen (WEA).

Windenergieanlagen, die aus Wind elektrische Energie erzeugen, weisen Rotoren mit verstellbaren Blättern auf. Der Winkel der Rotorblätter bestimmt, wie groß die Angriffsfläche des Windes ist, wodurch sich die Leistung der Windenergieanlage einstellen lässt. Der Winkel ist im Wesentlichen abhängig von der Windgeschwindigkeit. Beim Erreichen einer Grenzgeschwindigkeit werden die Blätter so gestellt, dass der Wind möglichst keine Angriffsfläche hat. Dies soll bewirken, dass die Windkraftmaschine nicht beschädigt wird. Die Stellung, in der der Wind keine Angriffsfläche hat, wird als Fahnenstellung bezeichnet.

Die im Normalbetrieb laufende Verstellung der Rotorblätter kann bei einem Defekt der Verstelleinrichtung, z.B. hervorgerufen durch einen Bauteilausfall nach einem Blitzeinschlag, möglicherweise nicht mehr ausgeführt werden. Die Windenergieanlage kann dadurch eine unzulässig hohe Rotordrehzahl erreichen, die eine Zerstörung der Windenergieanlage zur Folge haben könnte. Es ist daher besonders wichtig, dass bei einem derartigen Ausfall, eine sichere Verstellung der Rotorblätter in die Fahnenstellung gewährleistet ist. Man spricht hier von der so genannten Notverstellung.

Bei Windenergieanlagen ist es wichtig, dass im Falle eines Ausfalls des Versorgungsnetzes die Windenergieanlage nicht beschädigt wird. Die im Normalbetrieb laufende Regelung zum Einstellen der Rotorblattwinkel ist bei Ausfall des Versorgungsnetzes nicht mehr in Betrieb.

In der DE 103 35 575B4 wird eine Notbetriebseinrichtung gezeigt, bei die Spannung für den elektrischen Motor für das Verstellen der Rotorblätter von einem Umrichter zur Verfügung gestellt wird. Der Umrichter enthält nacheinander geschaltet einen Gleichrichter, einen Zwischenkreis und einen Wechselrichter. Im Zwischenkreis ist ein Energiespeicher vorgesehen, der die Energieversorgung für den elektrischen Motor bei Netzausfall sicherstellt. Dabei ist allerdings problematisch, dass die Elektronik eines Umrichters ausfällgefährdet ist. Dies ist besonders der Fall, wenn der Netzausfall durch einen Blitzeinschlag in die Windenergieanlage verursacht wurde, da die durch den Blitz verursachte Spannungserhöhung die Elektronik beschädigen kann.

In der DE 10 2006 015 511 A1 wird eine Windkraftanlage mit einer Vorrichtung zum Verstellen der Anstellwinkel der auf einer Nabe angeordneten Rotorblätter beschrieben. Dabei sind die Rotorblätter über jeweils zumindest einen Asynchronmotor im Normalbetrieb einstellbar und im Notbetrieb in ihre Sicherheitsstellung drehbar. Der Asynchronmotor wird im Notbetrieb über einen von einem Gleichstrommotor angetriebenen Kommutator aus einer netzunabhängigen Gleichstromquelle gespeist.

Aufgabe der Erfindung ist es, eine Verstelleinrichtung für Rotorblätter einer Windenergieanlage bereitzustellen, wobei die Verstelleinrichtung weniger störanfällig als die im Stand der Technik bekannten Verstelleinrichtungen ist.

Diese Aufgabe wird mit dem Gegenstand des unabhängigen Anspruchs gelöst. Vorteilhafte Weiterbildungen ergeben sich aus den abhängigen Ansprüchen.

Erfindungsgemäß wird eine Verstelleinrichtung für Rotorblätter einer Windenergieanlage bereitgestellt, bei der ein Wechselstrommotor zum Einstellen der Winkelstellung der Rotorblätter vorgesehen ist. Ein Eingang dient zum Empfang eines Eingangswechselstroms. Ein Frequenzumrichter ist zum Erzeugen eines zweiten Wechselstroms mit einer zweiten Frequenz vorgesehen, wobei dieser der zweite Wechselstrom den Wechselstrommotor treibt. Zudem ist eine Gleichspannungsquelle und Wechselrichter zum Umwandeln der von der Gleichspannungsquelle bereitgestellten Spannung in einen Wechselstrom für den Wechselstrommotor vorgesehen. Der Wechselrichter ist dabei getrennt von dem Frequenzumrichter.

Dadurch, dass der Wechselrichter getrennt von dem Frequenzumrichter vorgesehen wird, können für den Wechselrichter besonders robuste Bauteile verwendet werden. Vorzugsweise wird für den Frequenzumrichter ein Mikrocontroller verwendet, da Mikrocontroller eine hohe Energieeffizienz ermöglichen, allerdings störanfällig sind, da Mikrocontroller als integrierte Schaltung realisiert sind. Für den Wechselrichter brauchen nur wenige Bauteile vorgesehen werden, sodass die Ausfallraten sinken bzw. Zuverlässigkeiten ansteigen. Es ist auch möglich, dass die Ausfallraten dieser Bauelemente mit herkömmlichen Mitteln errechnet werden können.

Die vorliegende Erfindung bietet für so genannte Wechselstrom-Verstellsysteme, Verstellsysteme mit Drehstrommaschinen, Ausführung vorzugsweise als Asynchronmotoren, eine gleichwertige Rückfallebene wie konventionelle Gleichstrom-Verstellsysteme, Verstellsysteme mit Gleichstrommaschinen, Ausführung vorzugsweise als Doppelschlussmotoren.

Es ist vorstellbar, dass bei der Verwendung von Gleichstrommaschinen in der Verstelleinrichtung einer Windenergieanlage, die Energiespeicher der unterbrechungsfreien Stromversorgung mit Hilfe eines Schalters direkt aufgeschaltet und die Rotorblätter so in die sichere Fahnenstellung bewegt werden können.

Diese Lösung ist aber gegenwärtig bei konventionellen Wechselstrom-Verstellsystemen nicht möglich, da ein Drehstrommotor nicht direkt mit Gleichstrom betrieben werden kann. Die vorliegende Erfindung ermöglicht die Umwandlung der aus den Energiespeichern der unterbrechungsfreien Stromversorgung vorliegenden Gleichspannung, und zwar derart in eine 3-phasige Wechselspannung, dass ein Drehstrommotor betrieben werden kann.

Bei Gleichstrom-Verstellsystemen können nur durch zusätzliche Beschaltungsmaßnahmen, z.B. Anlaufwiderstand in Reihe zur Ankerwinklung, auftretende Anlaufmomente reduziert werden. Diese Anlaufwiderstände müssen aufgrund hoher Bemessungsleistungen und Bauräume meist außerhalb des Schaltschrankes montiert werden. Die Einsatzdauer der Anlaufwiderstände wird über Zeitrelais, teilweise redundant ausgeführt, gesteuert. Durch den zusätzlichen Komponenten- und Verdrahtungsaufwand wird das System teuerer und die Zuverlässigkeit verringert.

Vorzugsweise besteht der Wechselrichter aus diskret aufgebauten Bauteilen, um den Wechselrichter möglichst robuste zu machen.

Falls das Ausgangssignal des Wechselrichters eine feste Frequenz hat, kann der Wechselstrommotor in einer Frequenz betrieben werden, in der er ein hohes Moment erzeugt.

In einer Ausführungsform ist der Energiespeicher als Kondensator ausgebildet. Ein solcher kann besonders robust ausgeführt werden, wobei mithilfe von Doppelschichtkondensatoren auch genügend Energie gespeichert werden kann.

In einer anderen Ausführungsform ist der Energiespeicher als Akkumulator ausgebildet. Dieser kann im normalen Betrieb regelmäßig aufgeladen werden, damit er im Falle eines Not-Aus genügend Strom zur Verfügung stellen kann, um die Rotorblätter in die Fahnenstellung zu schwenken.

In einer Ausführungsform ist der Wechselstrommotor als Drehstrommotor ausgebildet und der Wechselrichter ist zum Erzeugen eines Drehstroms eingerichtet. Damit kann als Wechselstrommotor eine herkömmliche Asynchronmaschine oder Synchronmaschine verwendet werden und der Wechselrichter stellt einen Strom zur Verfügung, wie er auch von dem Frequenzumrichter erzeugt wird.

Bei einer Notverstellung in die Fahnenstellung kann es im ungünstigen Fall, gerade bei großen Windenergieanlagen, hervorgerufen durch eine zu hohe Windlast oder aufgrund der Gravitationskräfte des fallenden Blattes, zu einer Lastumkehr am Motor kommen. Der Motor arbeitet in diesem Fall generatorisch. Um Rückwirkungen, hervorgerufen durch generatorische Spannungsspitzen, auf die Energiespeicher der unterbrechungsfreien Stromversorgung zu vermeiden, muss die überschüssige Energie durch eine geeignete Schutzschaltung abgebaut werden.

Die vorliegende Erfindung arbeitet mit einer Spannungsmessung an den Eingängen der Aufschaltung der Energiespeicher. Liegt die Spannung auf einem kritischen Niveau, wird eine Entladeschaltung zyklisch aktiviert, bis die Spannung ein sicheres Niveau erreicht hat.

Falls der Wechselrichter auf seiner Gleichstromseite einen Überspannungsschutz aufweist, kann überschüssige Spannung, die im generatorischen Betrieb des Elektromotors auftreten, abgebaut werden. Damit wird verhindert, dass die Gleichspannungsquelle, bspw. der Kondensator oder Akkumulator, durch Überspannung zerstört wird.

In einer Ausführungsform weist der Wechselrichter eine Vielzahl von Schaltern auf, die jeweils zwischen einem Knoten der Gleichspannungsseite und einem Knoten der Wechselspannungsseite vorgesehen sind. Jeder der Schalter wird von einem pulsweiten-modulierten Signal angesteuert. Solche pulsweiten-modulierten Signale können mit diskret aufgebauten Bauteilen erzeugt werden.

In einer weiteren Ausführungsform werden die Ansteuersignale für die Schalter von einer Vorrichtung erzeugt, die einen Operationsverstärker aufweist, der an seinen Eingängen Ausgangssignale eines Sinussignal-Generators und eines Dreiecksgenerators empfängt.

Bei einer Notfahrt in die Fahnenstellung sollte ein Verfahrgeschwindigkeitsfenster eingehalten werden. Dies ist bei Gleichstrom-Verstellsystemen nur mit großem Aufwand realisierbar, da die Drehzahl der Gleichstrommotoren von der Spannung der Energiespeicher der unterbrechungsfreien Stromversorgung abhängt. In einer Ausführungsform ermöglicht die Erfindung neben einer fest einstellbaren Verfahrgeschwindigkeit auch die Möglichkeit einer Rampenfunktion beim Anfahren und Abbremsen. Die Rampenfunktion wird generell beim Anfahren und wahlweise beim Abbremsen, durch einen Schaltkontakt, kurz vor dem Erreichen der Fahnenstellung aktiviert. Durch diese Maßnahme werden Momentenstöße auf Komponenten und Strukturen der gesamten Windenergieanlage minimiert.

Die Erfindung betrifft auch eine Windenergieanlage mit einer erfindungsgemäßen Verstelleinrichtung. Eine solche zeichnet sich durch hohe Sicherheit bei der Notabschaltung aus.

Vorzugweise enthält die Windenergieanlage eine Motorbremse für den Wechselstrommotor vorgesehen ist. Damit kann z.B. im Falle eines Defekts der Verstelleinrichtung der Wechselstrommotor angehalten werden.

Die Erfindung wird anhand eines Ausführungsbeispiels anhand der Figuren näher erläutert. Dabei zeigt
- Figur 1: einen Ausschnitt aus einer Verstellvorrichtung für Rotorblätter einer Windenergieanlage,
- Figur 2: Details eines Wechselrichters der Verstelleinrichtung gemäß Figur 1,
- Figur 3: Steuersignale für Schalter des Wechselrichters gemäß Figur 3,
- Figur 4: Signale an ausgewählten Knoten des Wechselrichters gemäß Figur 3,
- Figur 5: Details des Wechselrichters gemäß Figur 2,
- Figur 6: ein weitere Ausführungsform eines Wechselrichters der Verstelleinrichtung gemäß Figur 1.

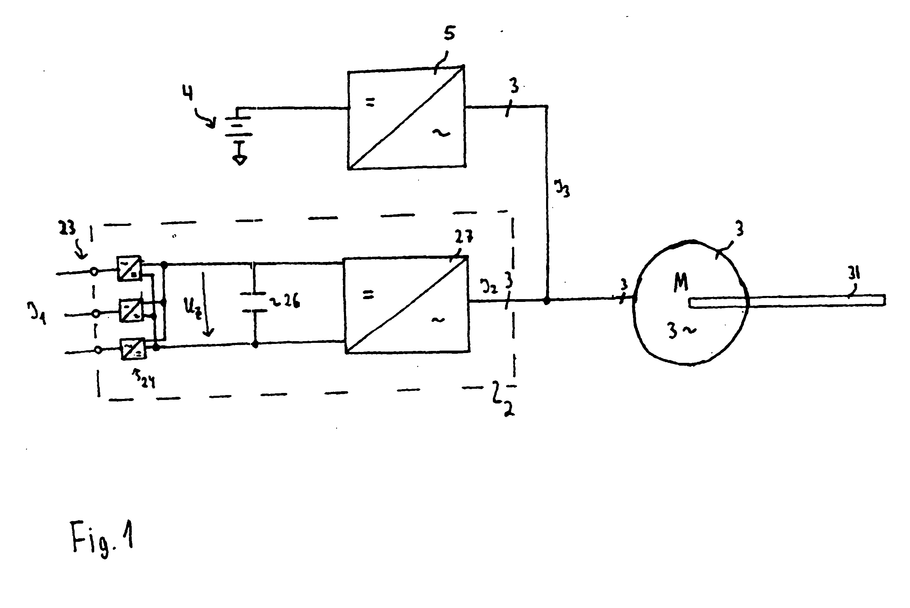

Figur 1 zeigt eine Verstelleinrichtung 1 für Rotorblätter einer Windenergieanlage. Die Verstelleinrichtung 1 weist einen Frequenzwandler 2, einen Elektromotor 3, eine Batterie 4 und einen elektrischen Wechselrichter 5 auf. Der Motor 3 betätigt eine Welle 31, die den Stellwinkel der Rotorblätter einstellt. Durch den Stellwinkel der Rotorblätter werden die Angriffsfläche und damit der Leistung der Windenergieanlage bestimmt. Der Winkel wird im Wesentlichen in Abhängigkeit der Windgeschwindigkeit eingestellt. Beim Erreichen einer Grenzgeschwindigkeit werden die Blätter allerdings so gestellt, dass der Wind möglichst keine Angriffsfläche hat. Diese Stellung wird als Fahnenstellung bezeichnet. Die Blätter werden in die Fahnenstellung auch verdreht, wenn das Versorgungsnetz der Windenergieanlage ausfällt. Dabei ist sicherzustellen, dass auch bei einem Netzausfall der Motor für das Verstellen der Blätter bei Netzausfall sicher gewährleistet wird.

Der Frequenzwandler 2 enthält drei Eingangsklemmen 23, über die drei sinusförmige, gegeneinander phasenverschobene Wechselstromspannungen von dem Versorgungsnetz empfangen werden. Diese Signale werden jeweils über den Gleichrichter 24 gleichgerichtet, sodass im Zwischenkreis 26 eine Gleichspannung UZ ausgebildet ist. Die Gleichspannung UZ wird durch den Kondensator 25 geglättet. Der Wechselrichter 27, der auch Teil des Frequenzwandlers 2 ist, erzeugt aus der Gleichspannung wiederum drei sinusförmige, gegeneinander phasenverschobene Spannungen, sodass am Ausgang des Frequenzwandlers 2 ein Drehstrom erzeugt wird. Die Frequenz des Drehstroms am Ausgang des Frequenzwandlers 2 ist in der Regel unterschiedlich zu der Frequenz des an den Eingängen des Frequenzwandlers 2 empfangenen Drehstroms.

Neben dem Frequenzwandler 2 ist der Wechselrichter 5 vorgesehen. Dieser dient dazu, bei Ausfall der Netzspannung, d. h., bei fehlendem Eingangsstrom für den Frequenzumrichter 2 Drehstrom für den Elektromotor 3 bereitzustellen. Dabei wird die in dem Akkumulator 4 gespeicherte Energie über den elektrischen Wechselrichter 5 in Drehstrom umgewandelt, um den Motor 3 anzutreiben, der seinerseits die Welle 31 so dreht, dass die Rotorblätter in die Fahnenstellung gedreht werden.

Die Trennung des Wechselrichters 5 vom Frequenzwandler 2 hat den Vorteil, dass der Wechselrichter 3 aus diskreten, analogen Bauelementen aufgebaut werden kann. Solche sind wesentlich weniger störempfindlich als integrierte Schaltungen. Der Frequenzumrichter 2 wird dagegen vorzugsweise als komplexes Bauteil mithilfe von einem oder mehreren Mikrocontrollern aufgebaut. Mit solchen Controllern kann eine möglichst energiesparende Architektur realisiert weiden, was für den Normalbetrieb der Windenergieanlage wichtig ist.

Der Wechselrichter 5 sorgt dafür, dass ein möglichst optimales Eingangssignal für den angeschlossenen Motor 3 zur Verfügung gestellt wird. Daraus folgt ein gutes Betriebsverhalten des Motors, da keine hohen Momentenstöße durch hohe Spannungsänderungen hervorgerufen werden. Aus diesem Grund werden von dem Wechselrichter 5 sinusförmige Signale bereitgestellt. Der elektrische Wechseltrichter 5 arbeitet relativ verschleißfrei, da keine Bürsten und Lager vorgesehen werden müssen.

Die Ausgangssignale I2 des Frequenzwandlers 2 und die Ausgangssignale I3 des Wechselrichters 5 werden in einer "wired OR Verbindung" miteinander verbunden. Wenn das Versorgungsnetz das Eingangssignal 11 dem Frequenzwandler 2 zur Verfügung stellt, wird der Wechselrichter 5 ausgeschaltet. Falls das Versorgungsnetz ausfällt, wird der Wechselrichter 5 eingeschaltet. Bei Versorgungsnetzausfall stellt dagegen der Frequenzwandler 2 keine Ausgangsspannungen mehr zur Verfügung. Somit treibt jeweils nur eine der beiden Komponenten den Motor 3. Zum Überprüfen, ob das Versorgungsnetz ausfällt ist ein in der Figur nicht gezeigter Detektor vorgesehen. In einer alternativen Ausführungsform ist anstatt der "wired OR" Verbindung ein Demultiplexer vorgesehen, der eines der beiden Signale I2 und I3 zur Weiterleitung an die Eingangsklemmen des Motors 3 auswählt.

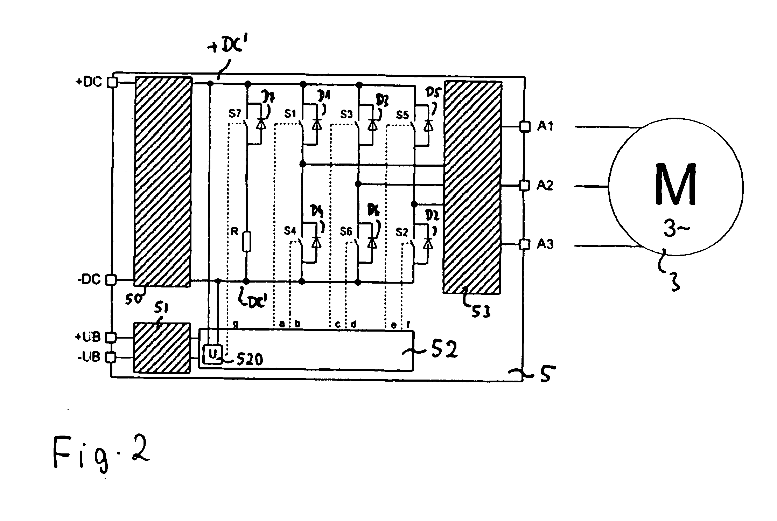

Figur 2 zeigt Details des Wechselrichter 5 aus Figur 1. Der Wechselrichter 5 weist die Eingangsklemmen +DC, -DC, +UB und -UB auf. Als Ausgangssignale erzeugt er Wechselstromsignale an den Ausgangsklemmen A1, A2 und A3.

Der Wechselrichter 5 weist einen ersten Überspannungsschutz 50, einen zweiten Überspannungsschutz 51, einen dritten Überspannungsschutz 53, eine Steuerung 52, einen ersten Schalter S1, einen zweiten Schalter S2, einen dritten Schalter S3, einen vierten Schalter S4, einen fünften Schalter S5, einen sechsten Schalter S6 und eine siebten Schalter S7 sowie einen Widerstand R auf. Der Knoten +DC' ist über den ersten Überspannungsschutz 50 mit dem Knoten +DC verbunden, während der Knoten -DC' über den ersten Überspannungsschutz 50 mit dem Eingang -DC verbunden ist.

Zwischen den Knoten +DC' und -DC' sind jeweils Reihenschaltung aus den Schaltern S1 und S4, eine Reihenschaltung aus den Schaltern S3 und S6, eine Reihenschaltung aus den Schaltern S5 und S2 und eine Reihenschaltung aus dem Schalter S7 und dem Widerstand R vorgesehen. Dabei sind die Schalter S1, S3, S5 und S7 jeweils mit einem Anschluss der Laststrecke mit dem Knoten +DC' verbunden, während jeweils ein Anschluss der Laststrecke der Schalter S4, S6 und S2 sowie ein Anschluss des Widerstands R mit dem Knoten -DC' verbunden ist. Der Verbindungsknoten zwischen den Schaltern S1 und S4 wird über den dritten Überspannungsschutz 53 zu dem Ausgang A1, der Verbindungsknoten zwischen den Schaltern S3 und S6 über den dritten Überspannungsschutz 53 zu dem Ausgang A2 und der Verbindungsknoten zwischen den Schaltern S5 und S2 zu dem Ausgang A3 über den dritten Überspannungsschutz 53 geführt.

Die Steuerung 52 ist mit zwei Eingängen über den zweiten Überspannungsschutz 51 mit den Eingängen +UB und -UB verbunden, während sie mit zwei weiteren Eingängen mit dem Knoten +DC' und -DC' verbunden ist. Die Ausgangssignale der Steuerung 52 werden an ihren Ausgängen a, b, c, d, e und f ausgegeben. Der Ausgang a schaltet den Schalter S1, der Ausgang b schaltet den Schalter S4, der Ausgang c schaltet den Schalter S3, der Ausgang d den Schalter S6, der Ausgang e den Schalter S5 und der Ausgang f den Schalter S2.

An den Anschlussklemmen +DC und -DC wird eine Gleichspannung aus einer beliebigen Gleichspannungsquelle angelegt. Diese Gleichspannungsquelle kann aus einem Energiespeicher oder einer Verschaltung mehrerer Energiespeicher bestehen. Als Energiespeicher kommen z. B. Kondensatoren, vorzugsweise Doppelschichtkondensatoren und Akkumulatoren-Technologien, vorzugsweise Lithium-lonen-Akkumulatoren, zur Anwendung. In dem beschriebenen Ausführungsbeispiel ist dies die Spannung der Batterie 4.

An den Klemmen +UB und -UB wird eine Versorgungsspannung angelegt, in diesem Fall wird diese Spannung ebenfalls an der Batterie 4 abgegriffen. Es wird in der Steuerung 52 eine endlose Schaltfolge erzeugt, die die Schalter S1 und S6 in festgelegten Schemata öffnet bzw. schließt. Die Schalter S1 und S6 können als IGBTs (Insolated Gate Bypolar Transistor), Leistungstransistoren oder sonstiger Leistungshalbleiter ausgeführt werden.

Generell dient die Vorrichtung dazu, die Drehstrommaschine so anzutreiben, dass ein Drehmoment zum Drehen der Rotorblätter erzeugt wird. Der auf das Rotorblatt wirkende Wind kann jedoch kurzfristig die Last an der Drehstrommaschine 3 umdrehen, indem er das Rotorblatt antreibt. In diesem Betriebsfall arbeitet die Drehstrommaschine 3 generatorisch.

Der Schalter S7 und R sind für den generatorischen Betrieb vorgesehen. Falls der Motor 3 so betrieben wird, dass er die Spannungen an den Ausgängen A1, A2 und A3 erhöht, führt dies zu einem umgekehrten Stromfluss und zu einer Überspannung an den Klemmen +DC und -DC. Diese Überspannung muss durch eine geeignete Schutzbeschaltung, realisiert durch den Schalter S7 und den Lastwiderstand R, abgebaut werden. Durch regelmäßiges Öffnen und Schließen des Schalters S7 wird die Spannung abgebaut. Der Schalter S7 kann bspw. als IGBT, Leistungstransistor oder sonstiger Leistungshalbleiter ausgeführt werden. Die Ansteuerung der Schutzschaltung erfolgt durch einen Spannungsdetektor 520 in der Steuerung 52.

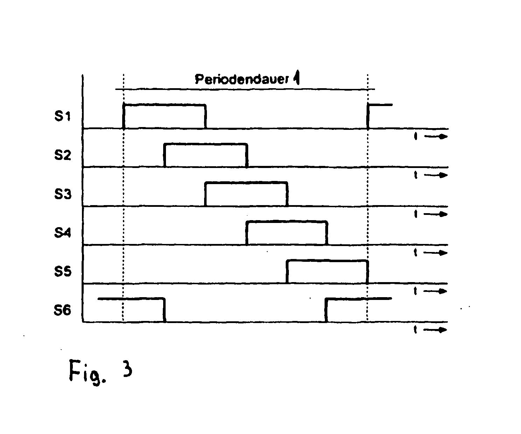

Figur 3 zeigt die Ansteuersignale für die Schalter S1 bis S6. Die Schalter S1 bis S6 werden jeweils periodisch für kurze Impulse angeschaltet. Innerhalb einer Periode wird jeder der Schalter für den Zeitraum eines Impuls angeschaltet, während er in der restlichen Zeit ausgeschaltet bleibt. Die Ansteuerung der Schalter untereinander erfolgt phasenversetzt, wobei besonders darauf geachtet wird, dass zwei Schalter einer Reihenschaltung niemals gleichzeitig an sind. Durch die blockweise Ansteuerung der Schalter S1 bis S6 werden zueinander um 120° phasenverschoben Signale erzeugt.

Durch diese Blockkummutierung wird an den Klemmen A1, A2 und A3 eine alternierende Wechselspannung erzeugt, die in der Lage ist, eine Drehstrommaschine, z. B. eine Asynchronmaschine zu betreiben.

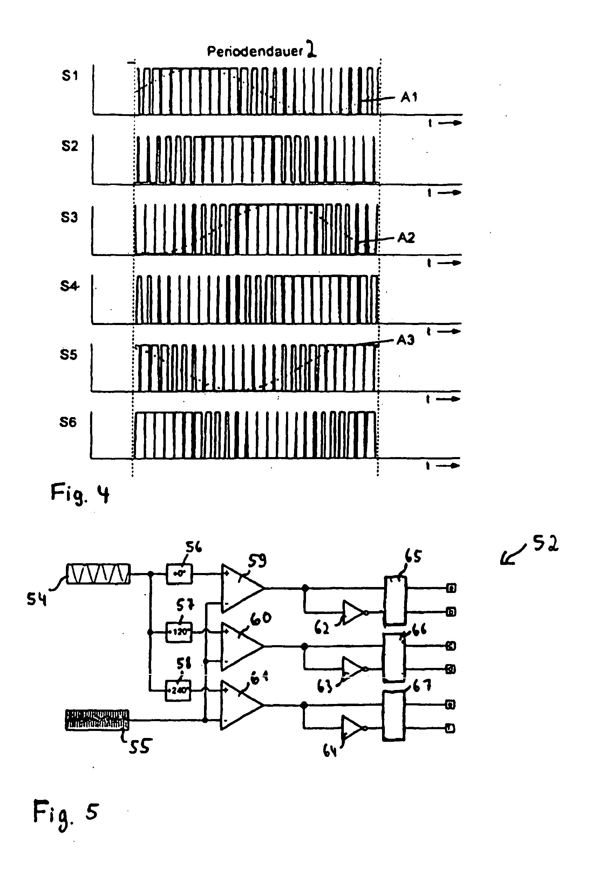

Figur 4 zeigt eine pulsweiten-modulierte Ansteuersignale für die Schalter S1 bis S6 des Wechselrichters 5, wobei innerhalb der Periodendauer zwei der Ansteuersignale für die Schalter S1 bis S6 gemäß einer Sinusfunktion variiert werden. In den Diagrammen sind jeweils mit den gestrichelten Linien die Ausgangsspannungen an den Ausgängen A1, A2 und A3 eingezeichnet. Es versteht sich, dass der an diesen Ausgängen angeschlossene induktiv wirkende Drehstrommotor ein Glätten der Spannung bewirkt.

Abbildung 5 zeigt eine Ansteuerschaltung 53, die Teil der Steuerung 52 aus Figur 2 ist. Die Ansteuerung 53 enthält einen Sinusgenerator 54, einen Dreiecksgenerator 55, Phasenverschiebungsblöcke 56, 57 und 58, Operationsverstärker 59, 60 und 61, Inverter 62, 63, 64 und Kurzschlusssicherungen 65, 66 und 67. Der invertierende Eingang der Operationsverstärker 59, 60 und 61 ist jeweils mit dem Ausgang des Dreiecksgenerators 55 verbunden. Der Ausgang des Sinusgenerators 54 ist über den ersten Phasenverschieber 56 mit dem nicht-invertierenden Eingang des Operationsverstärkers 59, über den zweiten Phasenverschieber 57 mit dem nicht-invertierenden Eingang des Operationsverstärkers 60 und über den dritten Phasenverschieber 58 mit dem nicht-invertierenden Eingang des Operationsverstärkers 61 verbunden.

Der Ausgang des Operationsverstärkers 59 ist über die Kurzschlusssicherung 65 mit dem Ausgang a und dem Eingang des Inverters 62 verbunden. Der Ausgang des Operationsverstärkers 60 ist über die Kurzschlusssicherung 66 mit dem Ausgang c und dem Eingang des Inverters 63 verbunden. Der Ausgang des Operationsverstärkers 61 ist über die Kurzschlusssicherung 67 mit dem Ausgang e verbunden. Der Ausgang des Inverters 62 ist über die Kurzschlusssicherung 65 mit dem Ausgang b, der Ausgang des Inverters 63 über die Kurzschlusssicherung 66 mit dem Ausgang d und der Ausgang des Inverters 64 ist über die Kurzschlusssicherung 67 mit dem Ausgang f verbunden.

Der erste Phasenverschieber 56 bewirkt keine Phasenverschiebung, d. h., seine Verschiebung ist 0°, die Verschiebung des Phasenverschiebers 57 beträgt 120° und die des Phasenverschiebers 58 beträgt 240°. Unter Phasenverschiebung wird die Phasendifferenz zwischen Eingangssignal und Ausgangssignal des jeweiligen Phasenverschiebers verstanden.

Durch den Vergleich der Sinus- mit der Dreiecksspannung in den Operationsverstärkern 59, 60 und 61 werden die in Figur 4 gezeigten Signale erzeugt. Die Ansteuerschaltung 53 wird mit möglichst wenigen analogen Bausteinen realisiert und diskret aufgebaut. Somit ist die Schaltung möglichst sicher aufgebaut, die auch im Falle eines Ausfalls der Versorgungsspannung und bei Blitzschlag weiterhin funktioniert.

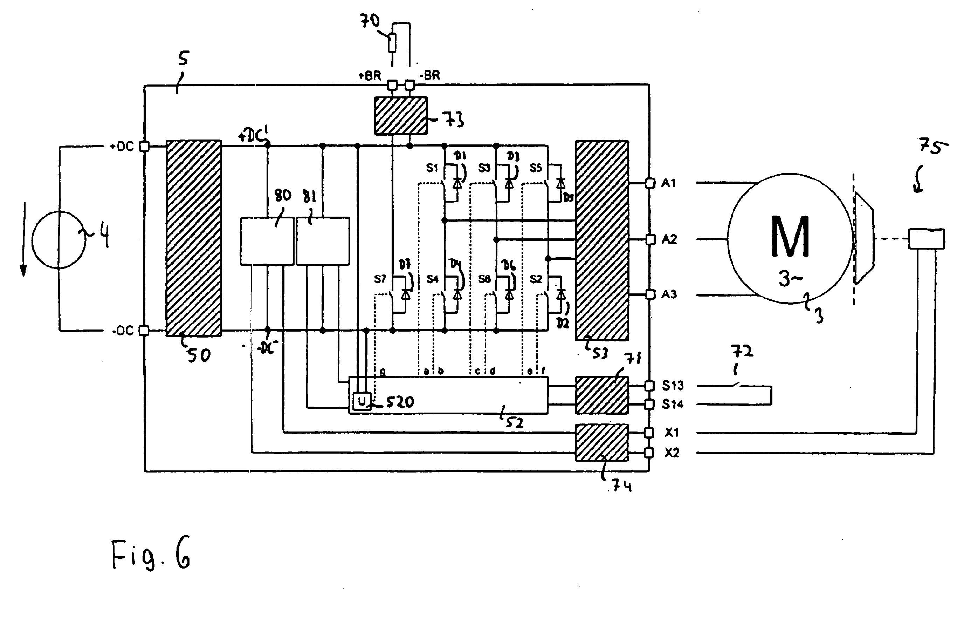

Figur 6 zeigt ein weitere Ausführungsform eines Wechselrichters 5 der Verstelleinrichtung gemäß Figur 1. Komponenten mit gleichen Funktionen wie in den vorherigen Figuren werden mit den gleichen Bezugszeichen bezeichnet und nicht erneut erläutert.

Die Notverstelleinrichtung hat Eingänge +DC und -DC für den Anschluss einer Gleichspannungsquelle 4. Die Gleichspannungsquelle 4 kann aus einem oder mehreren in Serie oder parallel geschalteten Energiespeichern bestehen. Als Energiespeicher können Kondensatoren, vor allem Doppelschichtkondensatoren, Lithium- oder Blei-basiert Akkumulatortechnologien verwendet werden.

Der Wechselrichter 5, der auch als Black Box betrachtet werden kann, hat beschaltbare Eingange S13 und S14. Durch diese Eingänge S13 und S14 wird durch einen Schalter 72 eine Rampenfunktion zum Abbremsen, kurz vor dem Erreichen der Fahnenstellung, aktiviert. Die endgültige Abschaltung erfolgt durch die Wegnahme der Gleichspannungsquelle am Eingang der Notverstelleinrichtung. Der Wechselrichter 5 weist zusätzliche Ausgänge X1 und X2 auf, die eine Motorbremse 75 ansteuern. Die Motorbremse 75 kann den Motor 3 Abbremsen bzw. zum Stehen bringen.

In dem Wechselrichter 5 sind zwei Spannungsaufbereiter 80 und 81 vorgesehen. Der Spannungsaufbereiter 80 erzeugt aus der Spannung zwischen den Knoten +DC' und -DC' eine Spannung für die Motorbremse von z.B. 24 V. Der Spannungsaufbereiter 81 erzeugt eine Spannung für die Steuerung 52.

Mit dem Anlegen der Gleichspannungsquelle 4 an den Klemmen +DC und -DC wird über die Ausgänge X1 und X2 die Motorbremse 75 so angesteuert, dass sie geöffnet wird.

Innerhalb der Notverstelleinrichtung arbeitet eine Steuerung 52, die den Ausgang zum Bremswiderstand und zum Drehstrommotor steuert. Die Steuerung 52 kann aus diskret aufgebauter Logik, einem oder mehreren integrierten Schaltkreisen oder einer Kombination beider Lösungen aufgebaut werden. Die Steuerung 52 versorgt sich über eine eigene Spannungsaufbereitung 51 durch den Eingang der Gleichspannungsquelle. Es versteht sich, dass diese Spannungsaufbereitung auch extern erfolgen kann.

Die Notverstelleinrichtung hat Ausgänge +BR und -BR zum Anschluss eines externen Bremswiderstandes 70, der die Energie bei einem generatorischen Betrieb abbaut. Die Ansteuerung des Bremswiderstandes 70 erfolgt intern, vorzugsweise über einen Halbleiter-Schalter S7, wobei der Halbleiter-Schalter eine Schutzbeschaltung D7, umgesetzt durch Dioden oder Kondensatoren, aufweist. Die Ansteuerung der Schutzbeschaltung erfolgt durch einen Spannungsdetektor 520 in der Steuerung 52.

Die Notverstelleinrichtung hat Ausgänge A1, A2 und A3 zum Anschluss eines 3-phasigen Drehstrommotors 3, der vorzugsweise als Asynchronmotor ausgeführt ist. Die Ausgänge A1, A2 und A3 werden intern, vorzugsweise durch Halbleiter-Schalter S1 bis S6, realisiert, wobei die Halbleiter-Schalter jeweils eine Schutzbeschaltung D1 bis D6, umgesetzt durch Dioden oder Kondensatoren, aufweisen.

Da diese Notverstelleinrichtung für die Notverstellung der Rotorblätter in die Fahnenstellung vorgesehen ist, nimmt sie einen hohen Stellwert im Gesamtsystem ein. Deshalb sind sämtliche Ein- und Ausgänge mit Überspannungsschutzeinrichtungen 50, 53, 71, 73 und 74 beschaltet.

Ein faradayscher Käfig, ausgeführt als Gehäusekonstruktion, schützt den Wechselrichter 5 gegen elektromagnetische Störfelder, Staub und Schmutz.

Auftretende Abwärme, hervorgerufen durch die Verlustleistung der Notverstelleinrichtung, wird über die Gehäusekonstruktion abgegeben.

Die Funktion lässt sich folgendermaßen beschreiben.

Durch das gezielte Anlegen einer Gleichspannung an den Eingang des Wechselrichters 5 wird dieser aktiviert und die Motorbremse geöffnet.

Durch die interne Spannungsaufbereitung wird die Intelligenz aktiviert.

Eine Steuerung steuert die Halbleiter-Schalter S1 bis S6 auf eine Art und Weise, in der nach einer Anfahrrampe sich eine konstante Drehzahl am Drehstrommotor einstellt.

Während der gesamten Betriebsdauer wird die Spannung an den Anschlussklemmen +DC und -DC des Energiespeichers 4 überwacht. Sollte diese zu groß werden, aktiviert die Intelligenz eine Entladestrecke, aufgebaut mit einem Haltleiter-Schalter S7 und externem Bremswiderstand 70, in einer Art und Weise, dass überschüssige Energie abgebaut werden kann.

Die Notverstelleinrichtung bietet durch weitere Schalteingänge S13 und S14 die Möglichkeit eines Stoppvorganges. Dadurch kann die Drehzahl am Drehstrommotor 3 kurz vor dem Erreichen der Fahnenstellung reduziert werden. Man "fährt weich" in die Endstellung.

Mit dem Erreichen der Fahnenstellung wird über einen mechanischen Schalter die Gleichspannung am Eingang weggeschaltet. Die Motorbremse 75 fällt ein und die Drehstrommaschine 3 bleibt stehen.

### Bezugszeichenliste

- 1: Verstellvorrichtung für Rotorblätter
- 2: Frequenzwandler
- 3: Drehstrommaschine
- 5: Wechselrichter
- 4: Batterie
- 23: Eingang
- 24: Gleichrichter
- 25: Zwischenkreis
- 26: Kondensator
- 27: Wechselrichter
- 50: erster Überspannungsschutz
- 51: zweiter Überspannungsschutz
- 52: Steuerung
- 53: dritter Überspannungsschutz
- 520: Spannungsdetektor
- 54: Sinusgenerator
- 55: Dreiecksgenerator
- 56, 57, 58: Phasenverschieber
- 59, 60, 61: Operationsverstärker
- 62, 63, 64: Inverter
- 65, 66, 67: Kurzschlusssicherung
- 70: Bremswiderstand
- 71: dritter Überspannungsschutz
- 72: Schalter
- 74: vierter Überspannungsschutz
- 75: Motorbremse
- 80: Spannungsaufbereitung
- 81: Spannungsaufbereitung

## Patentansprüche

1. Verstelleinrichtung für Rotorblätter einer Windenergieanlage, folgendes aufweisend:
- einen Wechselstrommotor (3) zum Einstellen der Winkelstellung der Rotorblätter,
- einen Eingang (23) zum Empfang eines Eingangswechselstroms (11) mit einer ersten Frequenz,
- einen Frequenzumrichter (2) zum Erzeugen eines Ausgangswechselstroms (12) mit einer zweiten Frequenz, wobei dieser Ausgangswechselstrom (12) zum Treiben des Wechselstrommotors (3) vorgehen ist,
- eine Gleichspannungsquelle (4) **dadurch gekennzeichnet, dass**
ein elektrischer Wechselrichter (5), getrennt von dem Frequenzumrichter (2), vorgesehen ist zum Umwandeln der von der Gleichspannungsquelle (4) bereitgestellten Spannung in einen sinusförmigen Wechselstrom (13) für den Wechselstrommotor (3), und dass der Wechselrichter aus diskret aufgebauten analogen Bauteilen besteht.

2. Verstelleinrichtung nach Anspruch 1, **dadurch gekennzeichnet, dass** der von dem Wechselrichter (5) bereitgestellte Wechselstrom (13) eine feste Frequenz hat.

3. Verstelleinrichtung nach einem der Ansprüche 1 oder 2, **dadurch gekennzeichnet, dass**
der Energiespeicher (4) als Kondensator ausgebildet ist.

4. Verstelleinrichtung nach einem der Ansprüche 1 bis 3, **dadurch gekennzeichnet, dass**
der Energiespeicher (4) als Akkumulator ausgebildet ist.

5. verstelleinrichtung nach einem der Ansprüche 1 bis 3, **dadurch gekennzeichnet, dass**
der Wechselstrommotor (3) ein Drehstrommotor ist und der Wechselrichter (5) zum Erzeugen eines Drehstroms eingerichtet ist.

6. Verstelleinrichtung nach einem der Ansprüche 1 bis 5, **dadurch gekennzeichnet, dass**
der Wechselrichter (5) auf seiner Gleichstromseite einen Überspannungsschutz (50) aufweist.

7. Verstelleinrichtung nach einem der Ansprüche 1 bis 6, **dadurch gekennzeichnet, dass**
der Wechselrichter (5) eine Vielzahl von Schaltern (S1, S2, S3, S4, S5, S6), jeweils zwischen einem Knoten der Gleichspannungsseite und einem Knoten der Wechselspannungsseite, aufweist, wobei die Schalter (S1, S2, S3, S4, S5, S6) jeweils von Pulsweiten-modulierten Signalen angesteuert werden.

8. Verstelleinrichtung nach Anspruch 7, **dadurch gekennzeichnet, dass** die Ansteuersignale für die Schalter (S1, S2, S3, S4, S5, S6) von einer Vorrichtung (53) erzeugt werden, die einen Operationsverstärker (59) aufweist, der an seinen Eingängen die Ausgangssignale eines Sinussignal-Generators (54) und eines Dreieckssignalgenerators (55) empfängt.

9. Verstelleinrichtung nach einem der Ansprüche 1 bis 7, **dadurch gekennzeichnet, dass** der Wechselstrommotor (3) als Asynchronmaschine ausgeführt ist.

10. Verstelleinrichtung nach einem der Ansprüche 1 bis 8, **dadurch gekennzeichnet, dass**
ein Spannungsdetektor zum Detektieren der Eingangswechselspannung und zum Einschalten des Wechselrichters (5) vorgesehen ist.

11. Verstelleinrichtung nach einem der Ansprüche 1 bis 10, **dadurch gekennzeichnet, dass**
der Wechselrichter (5) einen ersten Modus zum Einstellen einer fest einstellbaren Verfahrgeschwindigkeit des Wechselstrommotors (3) und einen zweiten Modus zum Einstellen einer Rampenfunktion der Verfahrensgeschwindigkeit des Wechselstrommotors (3) aufweist.

12. Verstelleinrichtung nach Anspruch 11, **gekennzeichnet durch** einen Schalter (72) zum Aktivieren des zweiten Modus kurz vor Erreichen - einer Fahnenstellung eines Rotors der Windenergieanlage.

13. Verstelleinrichtung nach einem der Ansprüche 1 bis 12, **dadurch gekennzeichnet, dass**
der Wechselrichter (5) mindestens einen integrierten Schaltkreis (IC) enthält.

14. Windenergieanlage mit einer Verstelleinrichtung nach einem der Ansprüche 1 bis 13.

15. Windenergieanlage nach Anspruch 14, **dadurch gekennzeichnet, dass** eine Motorbremse (75) für den Wechselstrommotor (3) vorgesehen ist.

16. Verfahren zum Betrieb einer Verstelleinrichtung für Rotorblätter einer Windenergieanlage, die einen Wechselstrommotor zum Einstellen der Winkelstellung der Rotorblatter aufweist, wobei die Verstelleinrichtung einen Frequenzumrichter (2) zum Treiben des Wechselstrommotors (3) und einen getrennt von dem Frequenzumrichter (2) vorgesehen elektrischen Wechselrichter (5), der aus diskret aufgebauten analogen Bauteilen besteht, umfasst, wobei das Verfahren den folgenden Schritt aufweist:
Umschalten von dem Frequenzumrichter (2) auf den Wechselrichter (5) zum Umwandeln einer von einer Gleichspannungsquelle (4) bereitgestellten Spannung in einen sinusförmigen Wechselstrom (13) für den Wechselstrommotor (3), sobald ein Notfahrtauslöseereignis eintritt.

## Claims

1. Adjusting device for rotor blades of a wind power plant, having the following:
- an AC motor (3) for adjusting the angular position of the rotor blades,
- an input (23) for receiving an input alternating current (11) with a first frequency,
- a frequency converter (2) for generating an output alternating current (12) with a second frequency, wherein this output alternating current (12) is provided for driving the AC motor (3),
- a DC voltage source (4), **characterized in that** an electrical inverter (5), isolated from the frequency converter (2), is provided for converting the voltage provided by the DC voltage source (4) into a sinusoidal alternating current (13) for the AC motor (3), and **in that** the inverter comprises discrete, analog component parts.

2. Adjusting device according to Claim 1, **characterized in that** the alternating current (13) provided by the inverter (5) has a fixed frequency.

3. Adjusting device according to either of Claims 1 and 2, **characterized in that** the energy store (4) is in the form of a capacitor.

4. Adjusting device according to one of Claims 1 to 3, **characterized in that** the energy store (4) is in the form of a rechargeable battery.

5. Adjusting device according to one of Claims 1 to 3, **characterized in that** the AC motor (3) is a three-phase motor, and the inverter (5) is designed for producing a three-phase current.

6. Adjusting device according to one of Claims 1 to 5, **characterized in that** the inverter (5) has an overvoltage protection means (50) on its DC side.

7. Adjusting device according to one of Claims 1 to 6, **characterized in that** the inverter (5) has a multiplicity of switches (S1, S2, S3, S4, S5, S6), each between a node of the DC voltage side and a node of the AC voltage side, wherein the switches (S1, S2, S3, S4, S5, S6) are each driven by pulse-width modulated signals.

8. Adjusting device according to Claim 7, **characterized in that** the actuating signals for the switches (S1, S2, S3, S4, S5, S6) are generated by an apparatus (53) which has an operational amplifier (59), which receives the output signals of a sinusoidal signal generator (54) and a delta signal generator (55) at its inputs.

9. Adjusting device according to one of Claims 1 to 7, **characterized in that** the AC motor (3) is in the form of an asynchronous machine.

10. Adjusting device according to one of Claims 1 to 8, **characterized in that** a voltage detector for detecting the input AC voltage and for switching on the inverter (5) is provided.

11. Adjusting device according to one of Claims 1 to 10, **characterized in that** the inverter (5) has a first mode for adjusting a fixedly adjustable traversing speed of the AC motor (3) and a second mode for adjusting a ramp function of the traversing speed of the AC motor (3).

12. Adjusting device according to Claim 11, **characterized by** a switch (72) for activating the second mode shortly before a flag position of a rotor of the wind power plant is reached.

13. Adjusting device according to one of Claims 1 to 12, **characterized in that** the inverter (5) contains at least one integrated circuit (IC).

14. Wind power plant comprising an adjusting device according to one of Claims 1 to 13.

15. Wind power plant according to Claim 14, **characterized in that** a motor brake (75) is provided for the AC motor (3).

16. Method for operating an adjusting device for rotor blades of a wind power plant, which adjusting device has an AC motor for adjusting the angular position of the rotor blades, wherein the adjusting device has a frequency converter (2) for driving the AC motor (3) and an electrical inverter (5), which is provided isolated from the frequency converter (2) and comprises discrete, analog component parts, wherein the method has the following step: switching over from the frequency converter (2) to the inverter (5) for converting a voltage provided by a DC voltage source (4) into a sinusoidal alternating current (13) for the AC motor (3) as soon as an emergency travel trigger event occurs.

## Revendications

1. Dispositif de réglage pour des pales de rotor d'une installation à énergie éolienne, comprenant les éléments suivants :
- un moteur à courant alternatif (3) permettant de régler la position angulaire des pales de rotor ;
- une entrée (23) permettant de recevoir un courant alternatif d'entrée (11) à une première fréquence ;
- un redresseur de fréquence (2) permettant de produire un courant alternatif en sortie (12) à une deuxième fréquence, ce courant alternatif en sortie (12) étant utilisé pour entraîner le moteur à courant alternatif (3) ;
- une source de tension continue (4) ;
**caractérisé en ce que** :
un ondulateur (5) électrique est prévu séparément du redresseur de fréquence (2) pour convertir la tension mise à disposition par la source de tension continue (4) en un courant alternatif (13) de forme sinusoïdale pour le moteur à courant alternatif (3) et que l'ondulateur se compose de composants analogiques à structure individuelle.

2. Dispositif de réglage selon la revendication 1, **caractérisé en ce que** le courant alternatif (13) mis à disposition par l'ondulateur (5) a une fréquence fixe.

3. Dispositif de réglage selon l'une quelconque des revendications 1 ou 2, **caractérisé en ce que** l'accumulateur d'énergie (4) prend la forme d'un condensateur.

4. Dispositif de réglage selon l'une quelconque des revendications 1 à 3, **caractérisé en ce que** l'accumulateur d'énergie (4) prend la forme d'un accumulateur.

5. Dispositif de réglage selon l'une quelconque des revendications 1 à 3, **caractérisé en ce que** le moteur à courant alternatif (3) est un moteur à courant triphasé et que l'ondulateur (5) est conçu pour produire un courant triphasé.

6. Dispositif de réglage selon l'une quelconque des revendications 1 à 5, **caractérisé en ce que** l'ondulateur (5) présente une protection contre les surtensions (50) sur son côté de courant continu.

7. Dispositif de réglage selon l'une quelconque des revendications 1 à 6, **caractérisé en ce que** l'ondulateur (5) comporte une pluralité de commutateurs (S1, S2, S3, S4, S5, S6), respectivement disposés entre un noeud du côté de tension continue et un noeud du côté de tension alternative, les commutateurs (S1, S2, S3, S4, S5, S6) étant respectivement commandés par des signaux modulés en largeur d'impulsion.

8. Dispositif de réglage selon la revendication 7, **caractérisé en ce que** les signaux de commande des commutateurs (S1, S2, S3, S4, S5, S6) sont produits par un dispositif (53) comportant un amplificateur fonctionnel (59) recevant au niveau de ses entrées les signaux de sortie d'un générateur de signal sinusoïdal (54) et d'un générateur de signal triangulaire (55).

9. Dispositif de réglage selon l'une quelconque des revendications 1 à 7, **caractérisé en ce que** le moteur à courant alternatif (3) prend la forme d'une machine asynchrone.

10. Dispositif de réglage selon l'une quelconque des revendications 1 à 8, **caractérisé en ce qu'**un détecteur de tension est prévu pour détecter la tension alternative en entrée et pour connecter l'ondulateur (5).

11. Dispositif de réglage selon l'une quelconque des revendications 1 à 10, **caractérisé en ce que** l'ondulateur (5) comporte un premier mode de réglage d'une vitesse d'avancée réglable en permanence du moteur à courant alternatif (3) et un deuxième mode de réglage d'une fonction de rampe de la vitesse d'avancée du moteur à courant alternatif (3).

12. Dispositif de réglage selon la revendication 11, **caractérisé par** la présence d'un commutateur (72) servant à activer le deuxième mode juste avant d'atteindre une position de traînage d'un rotor de l'installation à énergie éolienne.

13. Dispositif de réglage selon l'une quelconque des revendications 1 à 12, **caractérisé en ce que** l'ondulateur (5) contient au moins un circuit intégré (IC).

14. Installation à énergie éolienne pourvue d'un dispositif de réglage selon l'une quelconque des revendications 1 à 13.

15. Installation à énergie éolienne selon la revendication 14, **caractérisée en ce qu'**un frein moteur (75) est prévu pour le moteur à courant alternatif (3).

16. Procédé d'utilisation d'un dispositif de réglage pour des pales de rotor d'une installation à énergie éolienne comprenant un moteur à courant alternatif permettant de régler la position angulaire des pales de rotor, le dispositif de réglage comprenant un redresseur de fréquence (2) permettant d'entraîner le moteur à courant alternatif (3) et un ondulateur (5) électrique séparé du redresseur de fréquence (2), ledit ondulateur se composant de composants analogiques à structure individuelle, le procédé comportant les étapes suivantes :
basculement du redresseur de fréquence (2) sur l'ondulateur (5) pour convertir une tension mise à disposition par une source de tension continue (4) en un courant alternatif (13) de forme sinusoïdale pour le moteur à courant alternatif (3) dès qu'un événement de déclenchement de conduite d'urgence survient.
